# EUROPEAN PATENT APPLICATION

(11) **EP 2 009 727 A1**
(43) Date of publication of application: **31.12.2008**
(21) Application number: 07739822.0
(22) Date of filing: 27.03.2007
(51) Int. Cl.: H01M 8/06, C01B 3/08, C01F 5/24, H01M 8/04

(54) **ENERGY SUPPLY SYSTEM AND HYDROGEN-GENERATING SUBSTANCE**

(30) Priority: 28.03.2006 JP 2006089367
(71) Applicant: Mitsubishi Heavy Industries, Ltd., Minato-ku Tokyo 108-8215 (JP)
(72) Inventor: MORI, Yasushi, Minato-ku Tokyo 1088215 (JP); GENGO, Tadashi, Minato-ku Tokyo 1088215 (JP); KOBAYASHI, Yoshinori, Minato-ku Tokyo 1088215 (JP)
(74) Representative: Bongiovanni, Simone
(86) International application number: PCT/JP2007/056384
(87) International publication number: WO 2007/116734

(57) **Abstract**

An energy supplying system is used which includes an energy generating section, a hydrogen supplying section 2 and a treatment section 5. The energy generating section is supplied with hydrogen and oxygen and generates energy. The hydrogen supplying section 2 produces hydrogen by a reaction of water 23 included in exhaust from the energy generating section with hydrogen-producing material 21 in the hydrogen supplying section. The hydrogen-producing material 21 includes magnesium. The treatment section 5 supplies hydroxide produced by the reaction of the water 23 with the hydrogen-producing material 21 to gas, and obtains carbonate 24 and the reaction water by a reaction of the hydroxide with carbon dioxide in the gas.

## Description

### Technical Field

The present invention relates to an energy supplying system and hydrogen-producing material.

### Background Art

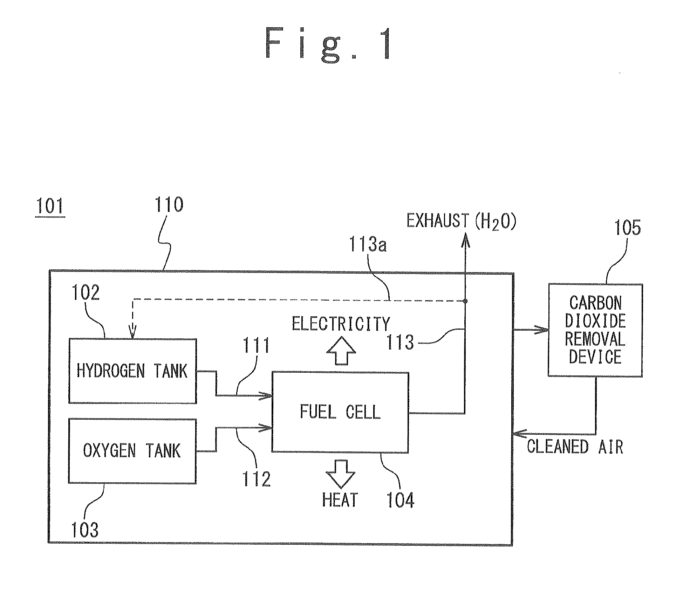

Known is an energy supplying system for generating energy (for example, electricity and heat) by utilizing hydrogen and supplying the energy. Fig. 1 is a schematic diagram showing one example of a conventional energy supplying system. The conventional energy supplying system 101 includes a fuel cell 104 as an energy generating device, a hydrogen tank 102, and an oxygen tank 103. To the fuel cell 104, hydrogen is supplied from the hydrogen tank 102 via a pipe 111 and oxygen is supplied from the oxygen tank 103 via a pipe 112, respectively. The fuel cell 104 generates electric power based on the hydrogen and the oxygen and generates heat. The fuel cell 104 emits exhaust (water vapor) via a pipe 113.

Now, from view points of environmental concern and efficient use of energy, it is desired for the energy supplying system 101 to suppress emissions as much as possible and to reuse reusable materials as much as possible. Especially, in a case of using the energy supplying system 101 in a closed space 110 such as facilities under the sea, under the ground, and in the universe and as vehicle, the desire is particularly strong. For example, when the hydrogen tank 102 produces hydrogen by reaction of metal with water, it can be considered to circulate the water vapor in the exhaust to the hydrogen tank 102 via a pipe 113a. As such art, Japanese Laid Open Patent Application (JP-P2003-317786A) discloses a fuel cell generating system. The fuel cell generating system includes: a fuel cell (2) which generates electricity by using hydrogen as fuel while producing water; a hydrogen producing device (4) which produces hydrogen by reaction of hydrogen-producing material (P) with water (W) and supplies the hydrogen to the fuel cell (2); and a water supplying device (7) which receives the water produced by the operation of the fuel cell (2) and supplies the water as water for the reaction to the hydrogen producing device (4).

The hydrogen producing device produces hydrogen by supplying water to the hydrogen-producing material (for example, particles of Magnesium alloy). It is described that a hydrogen-producing efficiency can be improved since the water from the fuel cell is hot; however, a control method for increasing and decreasing the production rate of hydrogen is not specifically described. Aqueous solution of Mg(OH)₂ produced along with the production of hydrogen is removed to outside, however, it is not specifically described how the aqueous solution is treated. Art to suppress the emissions and improve the efficiency is desired for the energy supplying system used in the closed space.

Meanwhile, in the closed space 110, concentration of carbon dioxide in the air is increased by a human activity and use of devices. For this reason, the air is required to be continuously cleaned by a carbon dioxide removal device 105 such as PSA (Pressure Swing Adsorption). The device, however, is independent from the energy supplying system. Art to enables the suppression of increase of the concentration of carbon dioxide is desired for the energy supplying system used in the closed space.

Japanese Laid Open Patent Application (JP-P2002-208425A) discloses a fuel reformer for fuel cell as related art. The fuel reformer for fuel cell produces hydrogen from fuel and water vapor. The fuel reformer includes: a fuel reforming catalyst layer in which catalyst for steam reforming of the fuel is filled; to-be-reformed fuel gas supplying means for introducing to-be-reformed fuel gas including the fuel and the water vapor into the fuel reforming catalyst layer; reformed fuel gas emitting means for emitting gas mainly containing hydrogen produced by a steam reforming from the fuel reforming catalyst layer; and a metal oxide layer provided to a downstream of the fuel reforming catalyst layer in order to absorb carbon dioxide included in the reformed fuel. The metal oxide layer is, for example, a magnesium oxide layer. The magnesium oxide layer reacts with carbon dioxide produced along with hydrogen by a methanol reforming reaction and produces magnesium carbonate. That is, the carbon dioxide can be retrieved without being emitted to the atmosphere.

Japanese Laid Open Patent Application (JP-P2002-373690A) discloses a fuel cell system as related art. The fuel cell system includes a fuel cell, a hydrogen storage device, a third flow path, and a radiator. The hydrogen storage device is provided to a second flow path branched from a first flow path connecting a hydrogen supplying device to the fuel cell and contains hydrogen absorbing alloy. The third flow path circulates cooling water for the fuel cell. The radiator is provided to the middle of the third flow path. The hydrogen storage alloy has a characteristic for absorbing and not emitting hydrogen when the fuel cell system stops before warm-up. The hydrogen storage device is provided so as to exchange heat with the cooling water in a down stream of the radiator of the third flow path. The fuel cell system further includes means for detecting the temperature of the cooling water in the down stream of the radiator of the third flow path, and means for controlling the temperature of the cooling water to be decreased by causing the hydrogen absorbing alloy to emit hydrogen when the detected temperature of the cooling water reaches an operational maximum temperature of the fuel cell. In the fuel cell system, the flow path of the cooling water for the fuel cell and a flow path of water to the hydrogen storage alloy are identical.

Japanese Laid Open Patent Application (JP-P2002-80202A) discloses a production system of fuel gas for fuel cell as related art. In the production system of fuel gas, metal hydride is divided into fine particles and supplied into a reactor, water is sprayed from a sprayer, and the metal hydride is hydrolyzed to produce hydrogen. Water produced in a fuel cell is used for the supplied water. In this manner, a water tank for the hydrolysis can be omitted or miniaturized and the whole of the system can be miniaturized. A configuration in which waste heat from the fuel cell is supplied to the reactor for thermal decomposition of the metal hydride and a configuration in which heat generated in the hydrolysis is used for hydrolysis of another metal hydride can be also employed. In the fuel cell system, heat of the cooling water for the fuel cell is used to produce hydrogen in some cases; however, the cooling water itself for the fuel cell is not used to produce hydrogen.

### Disclosure of Invention

An object of the present invention is to provide an energy supplying system and hydrogen-producing material able to suppress and reuse emissions as much as possible.

Another obj ect of the present invention is to provide an energy supplying system and hydrogen-producing material able to suppress increasing of concentration of carbon dioxide in a closed space (or a limited space).

Further another object of the present invention is to provide an energy supplying system and hydrogen-producing material able to suppress and reuse emissions in a closed space as much as possible.

Further another object of the present invention is to provide an energy supplying system and hydrogen-producing material able to stably produce and supply required amount of hydrogen in a closed space without depending on operational conditions.

The above and other objects and advantages of the present invention can be easily understood from the following descriptions and the accompanying drawings.

To solve the above problem, an energy supplying system according to the present invention includes: a hydrogen supplying section in which hydrogen-producing material react with water to produce hydrogen and hydroxide; and an energy generating section configured to generate energy by using the hydrogen supplied from the hydrogen supplying section and oxygen supplied from an oxygen supplying section. The system includes a treatment section in which the hydroxide produced in the hydrogen supplying section reacts with gas including at least carbon dioxide to produce the water.

The above mentioned energy supplying system may include a separation section configured to separate respectively carbonate produced in the hydrogen supplying section and the water.

In the above mentioned energy supplying system, the hydrogen-producing material is hydride including at least one material selected from a group consisting of Mg, Ni, Fe, V, Mn, Ti, Cu, Ag, Ca, Zn, Zr, Co, Cr, and Al. A surface of the hydride may be coated with a water-soluble film.

In the above mentioned energy supplying system, the water-soluble film may include material which dissolves when contacting water.

In the above mentioned energy supplying system, the water-soluble film may include at least one material selected from a group consisting of materials which dissolve when contacting water such as aqueous epoxy resin, aqueous urethane resin, aqueous acrylic resin, aqueous polyester resin, aqueous acrylic silicon resin, aqueous fluorine resin, and aqueous hybrid polymer of silica and organic compound.

In the above mentioned energy supplying system, the hydrogen supplying section may include temperature regulating means for controlling temperature of the hydrogen-producing material.

The above mentioned energy supplying system may include water amount regulating means for controlling amount of water in the hydrogen supplying section.

The above mentioned energy supplying system may include pressure regulating means for controlling pressure in the hydrogen supplying section.

In the above mentioned energy supplying system, the hydrogen supplying section may include a hydrogen-producing material supplying section configured to supply the hydrogen-producing material into said hydrogen supplying section.

The above mentioned energy supplying system may include a heat exchanging section configured to control temperatures of the water and the hydrogen.

In the above mentioned energy supplying system, the heat exchanging section may control temperatures of the water and the hydrogen by using the oxygen.

In the above mentioned energy supplying system, the water may include water vapor.

To solve the above mentioned problem, hydrogen-producing material according to the present invention includes: a particle reacting with water to emit hydrogen; and a water-soluble film coating a surface of the particle.

In the above mentioned hydrogen-producing material, the particle may include material having a characteristic of emitting hydrogen in a hydrolysis reaction.

In the above mentioned hydrogen-producing material, the particle may include at least one material selected from a group consisting of Mg, Ni, Fe, V, Mn, Ti, Cu, Ag, Ca, Zn, Zr, Co, Cr, and Al.

In the above mentioned hydrogen-producing material, the water-soluble film may include material which dissolves when contacting water.

In the above mentioned hydrogen-producing material, the water-soluble film may include at least one material selected from a group consisting of aqueous epoxy resin, aqueous urethane resin, aqueous acrylic resin, aqueous polyester resin, aqueous acrylic silicon resin, aqueous fluorine resin, and aqueous hybrid polymer of silica and organic compound.

To solve the above mentioned problem, a production method of hydrogen-producing material according to the present invention includes: (a) placing a particle reacting with water to emit hydrogen in a reducing atmosphere of a first condition such that an oxide film on a surface of the particle is removed; and (b) placing the particle in an oxidizing atmosphere of a second condition such that an oxide film is formed on a part of the surface.

In the above mentioned production method of hydrogen-producing material, the particle may include material having a characteristic of emitting hydrogen in a hydrolysis reaction.

In the above mentioned production method of hydrogen-producing material, the particle may include at least one material selected from a group consisting of Mg, Ni, Fe, V, Mn, Ti, Cu, Ag, Ca, Zn, Zr, Co, Cr, and Al.

In the above mentioned production method of hydrogen-producing material, the oxidizing atmosphere of the second condition may be controlled through a ratio between partial pressures of oxygen and non-oxidizing gas.

To solve the above mentioned problem, an energy supplying system according to the present invention includes: a hydrogen supplying section in which hydrogen-producing material react with water to produce hydrogen and hydroxide; an energy generating section configured to generate energy by using the hydrogen supplied from the hydrogen supplying section and oxygen supplied from an oxygen supplying section; and a cooling section including a circulation flow path in which cooling water for cooling the energy generating section flows. The circulation flow path includes a branch flow path for supplying the cooling water from the circulation flow path to the hydrogen supplying section based on flow rate of hydrogen supplied from the hydrogen supplying section to the energy generating section.

The above mentioned energy supplying system may include a treatment section in which hydroxide produced in the hydrogen supplying section reacts with gas including at least carbon dioxide to produce water.

The above mentioned energy supplying system may include a separation section configured to separate respectively carbonate produced in the hydrogen supplying section and the water.

### Brief Description of Drawings

Fig. 1 is a schematic diagram showing one example of a conventional energy supplying system;
Fig. 2 is a block diagram showing a configuration of an energy supplying system according to a first embodiment of the present invention;
Fig. 3 shows a structure of hydrogen-producing material according to the embodiment of the present invention;
Fig. 4 shows another structure of hydrogen-producing material according to the embodiment of the present invention;
Fig. 5 is a block diagram showing a configuration of an energy generating system according to a second embodiment of the present invention;
Fig. 6 is a block diagram showing a configuration of an energy generating system according to a third embodiment of the present invention;
Fig. 7 is a block diagram showing a configuration of an energy generating system according to a forth embodiment of the present invention;
Fig. 8 is a block diagram showing a configuration of an energy generating system according to a fifth embodiment of the present invention;
Fig. 9 is a schematic diagram showing another configuration of a hydrogen supplying section 2;
Fig. 10 is a block diagram showing a configuration of an energy supplying system according to a sixth embodiment of the present invention; and
Fig. 11 is a block diagram showing a configuration of an energy supplying system according to a seventh embodiment of the present invention.

### Best Mode for Carrying Out the Invention

Referring to attached drawings, energy supplying systems and hydrogen-producing materials according to embodiments of the present invention will be described below.

### (First embodiment)

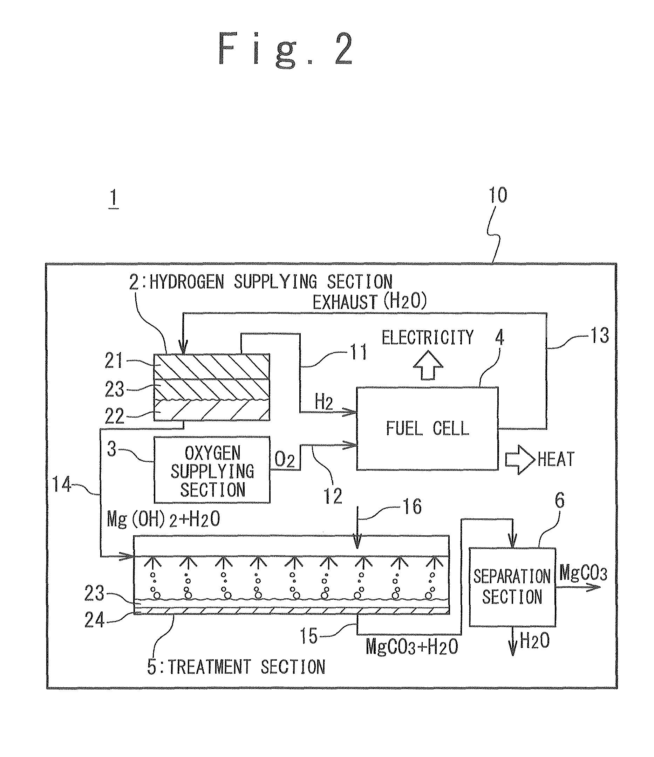

A configuration of an energy supplying system according to a first embodiment of the present invention will be described. Fig. 2 is a block diagram showing the configuration of the energy supplying system according to the first embodiment of the present invention. An energy supplying system 1 is provided in a closed space 10, and includes a hydrogen supplying section 2, an oxygen supplying section 3, a fuel cell 4, a treatment section 5, and a separation section 6.

The closed space 10 is equipment forming an approximately closed space as a whole such as facilities provided under the sea, under the ground, and in the universe, and as vehicles moving under the sea, under the ground, and in the universe. In the closed space 10, carbon dioxide (CO₂) is increased by a human activity and use of devices. The energy supplying system 1 is required to suppress emissions and to reuse them as much as possible because fuel and commodities able to be brought are limited and because of environmental consciousness.

In the hydrogen supplying section 2, hydrogen (H₂) and magnesium hydroxide (Mg(OH)₂) 22 are produced in a reaction of water (H₂O) 23 with magnesium (Mg) particles 21 as indicated by the following formula:

Mg + 2H₂O → Mg(OH)₂ + H₂.

The water (H₂O) 23 is included in exhaust from the fuel cell 4 and is supplied from a pipe 13. The water (H₂O) 23 is liquid water, mixture of liquid water and water vapor, or only water vapor. The magnesium (Mg) particles 21 are arranged in the hydrogen supplying section 2. The produced hydrogen (H₂) is supplied to the fuel cell 4 via a pipe 11. The produced magnesium hydroxide (Mg(OH)₂) 22 precipitates in the water 23 and is supplied to the treatment section 5 via a pipe 14 in the form of slurry in which the magnesium hydroxide is mixed with water.

The oxygen supplying section 3 supplies oxygen (O₂) to the fuel cell 4 via a pipe 12. The oxygen supplying section 3 is not restricted specifically, however, is, for example, an oxygen tank.

The fuel cell 4 generates electric power and heat based on the hydrogen (H₂) from the hydrogen supplying section 2 and the oxygen (O₂) from the oxygen supplying section 3. In addition, the fuel cell generates water (water vapor) as emissions. In the present invention, the fuel cell 4 is not limited in type specifically, however, is, for example, a PEFC (Polymer Electrolyte Fuel Cell). However, another equipment for generating energy by using hydrogen may be employed in place of the fuel cell. For example, a hydrogen gas engine is employed. In the case of the hydrogen gas engine, mechanical power (electric power when working with an electric generator) and heat are generated based on hydrogen and oxygen as well as the fuel cell 4 and exhaust from the engine is water (water vapor). The electric power (mechanical power) and heat are retrieved and used by apparatus not shown in the figure.

The treatment section 5 is supplied with the slurry (magnesium hydroxide (Mg(OH)₂) 22 + water 23) from the hydrogen supplying section 2 via a pipe 14 and supplied with atmosphere gas (gas including carbon dioxide (CO₂)) of the closed space 10 via a pipe 16. The treatment section 5 atomizes (sprays) the slurry into the atmosphere gas such that the slurry and the atmosphere gas are sufficiently mixed. Then, the water (H₂O) 23 and magnesium carbonate (MgCO₃) 24 are produced in a reaction of the magnesium hydroxide (Mg(OH)₂) 22 in the slurry with the carbon dioxide (CO₂) in the atmosphere gas as indicated by the following formula:

Mg(OH)₂ + CO₂ → MgCO₃ + H₂O.

The produced magnesium carbonate (MgCO₃) 24 precipitates in the water (H₂O) 23 and is supplied to the separation section 6 via a pipe 15 in the form of slurry in which the magnesium carbonate is mixed with the water 23.

The separation section 6 separates the magnesium carbonate (MgCO₃) 24 and the water (H₂O) 23 in the slurry (the magnesium carbonate (MgCO₃) 24 + the water (H₂O) 23). For example, filtration is employed for the separation. The treatment section 5 solidifies and removes the separated magnesium carbonate 24, and delivers the water 23 to another device (not shown in the figure) to reuse it. With respect to the reuse, the water is used, for example, as water for the hydrogen supplying section 2 or for an anode of the fuel cell via a water storage device not shown in the figure.

In the energy supplying system according to the present invention, the magnesium hydroxide 22 produced in the production of the hydrogen is not emitted but used for the treatment of the carbon dioxide necessarily produced in the closed space 10. Accordingly, a carbon dioxide removal device is not required to be provided. In addition, the useful water 23 can be produced by using the carbon dioxide and the magnesium hydroxide 22 which are conventionally removed as wastes. That is, in the closed space 10, increase of the concentration of carbon dioxide can be suppressed and emissions (the carbon dioxide and the magnesium hydroxide 22) can be suppressed and reused.

Next, the magnesium (Mg) particles 21 used for the hydrogen supplying section 2 will be described. The magnesium particles 21 are particles including magnesium (Mg) and emit hydrogen by reacting with water. That is, the magnesium particles 21 may be pure magnesium particles, may be magnesium particles including impurities, may be particles of alloy including magnesium, or may be particles including magnesium of catalyst metal carried by catalyst carriers. Or, hydrogen-producing material 21 according to the present invention, which is described below, may be used.

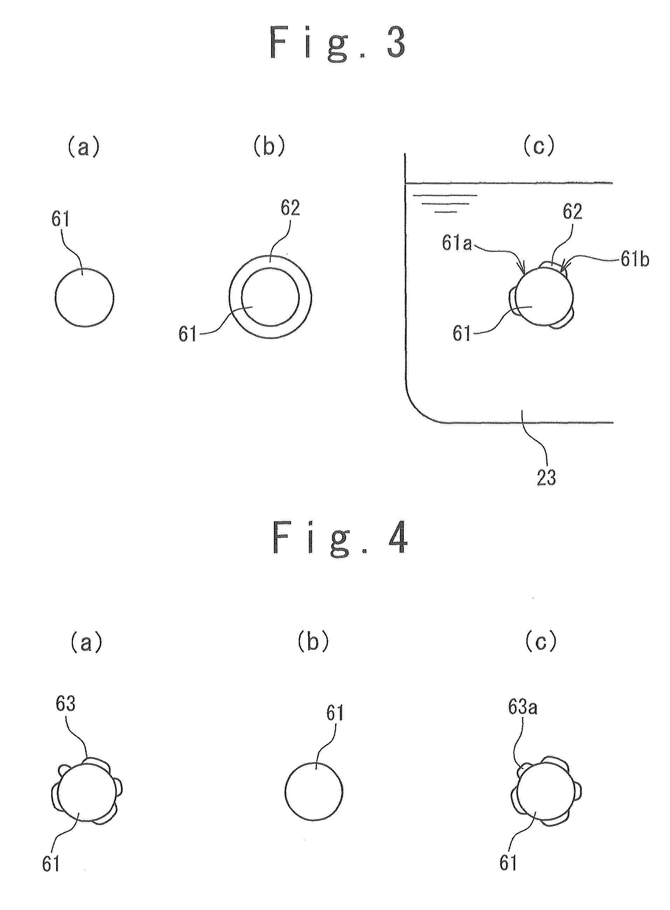

Fig. 3 shows a structure of hydrogen-producing material according to the embodiment of the present invention. The hydrogen-producing material 21 according to the present invention is formed by coating a surface of a magnesium particle 61 (for example, a pure magnesium particle, a magnesium particle including impurities, a particle of alloy including magnesium, or a particle including magnesium of catalyst metal carried by catalyst carriers) shown in (a) of Fig. 3 with a water-soluble film 62 as shown in (b) of Fig. 3. The water-soluble film 62, for example, includes at least one material selected from a group consisting of materials which dissolve when contacting water such as aqueous epoxy resin, aqueous urethane resin, aqueous acrylic resin, aqueous polyester resin, aqueous acrylic silicon resin, aqueous fluorine resin, and aqueous hybrid polymer of silica and organic compound.

As described above, by being coated with the water-soluble film 62, the surface of the particle 61 is prevented from being oxidized. In addition, as shown in (c) of Fig. 3, since the water-soluble film 62 dissolves because of the supplied water and a surface 61a is exposed, hydrogen can be produced by a reaction with the water 23. Furthermore, by controlling the type of the water-soluble film 62 and a condition of forming the film, a ratio of the exposed surface 61a to an unexposed surface 61b of the particle 61 can be controlled and then the production rate of the hydrogen can be controlled. For example, when a water-soluble material relatively insoluble to water is used for the water-soluble film, since the water-soluble film does not dissolve entirely but remains partially on the surface, the production rate of hydrogen can be suppressed compared to a case in which the film dissolves entirely. In addition, since the water-soluble film does not dissolve entirely but remains partially on the surface also in case that the water-soluble film is provided to have a large thickness, the production rate of hydrogen can be suppressed compared to a case in which the film dissolves entirely.

Moreover, by controlling temperature of the supplied water, the ratio of the surface 61a to the surface 61b of the water-soluble film 62 can be controlled more precisely and the production rate of hydrogen can be controlled more accurately. Forexample,sincethewater-solublefilm does not dissolve entirely but remains partially on the surface by lowering the temperature of the water, the production rate of the hydrogen can be suppressed compared to a case in which the film dissolves entirely. An energy supplying system in which the temperature of the water is controlled will be described in a second embodiment or other embodiments after the second embodiment.

In consideration of the reaction of the magnesium hydroxide 22 with carbon dioxide in the treatment section 5, magnesium is used as the particle 61 in the above mentioned hydrogen supplying section 2. However, the hydrogen-producing material 21 according to the present invention does not limit the particle 61 to magnesium. When the above mentioned constraint relevant to the treatment section 5 is removed, the particle 61 includes at least one material selected from a group consisting of materials having characteristic of emitting hydrogen in hydrolysis reaction, such as Mg, Ni, Fe, V, Mn, Ti, Cu, Ag, Ca, Zn, Zr, Co, Cr, and Al. The particle 61 may be a particle formed almost entirely with the material, may be a particle of alloy including the material, or may be a particle including the material of catalyst metal carried by catalyst carriers.

Also in this case, the surface of the particle 61 can be prevented from the oxidation, hydrogen can be produced because the water-soluble film 62 dissolves in the supplied water, the production rate of hydrogen can be controlled by controlling the type of the water-soluble film 62 and the condition of forming the film, and the production rate of hydrogen can be controlled by controlling temperature and pressure of the water to be supplied.

Furthermore, as the hydrogen-producing material according to the present invention, following materials can be employed. Fig. 4 shows another structure of hydrogen-producing material 21 according to the embodiment of the present invention. As shown in (a) of Fig. 4, when a particle 61 such as magnesium particle is stored in the air atmosphere, oxide 63 is formed on its surface. Accordingly, as shown in (b) of Fig. 4, when the particle 61 is used, the particle 61 is placed in a predetermined reducing atmosphere such that the oxide film 63 on the surface is removed. The predetermined reducing atmosphere is, for example, hydrogen atmosphere at atmospheric pressure and at approximately 300°C. Thus, the oxide film 63 coating the surface is reduced and removed. After that, the particle 61 is placed in a predetermined oxidizing atmosphere such that an oxide film 63a is formed on a part of its surface. The predetermined oxidizing atmosphere is set by a ratio between partial pressures of oxygen and non-oxidizing gas. When the partial pressure of oxygen is high, an area of the surface coated with the oxide film is large. When the partial pressure of oxygen is low, an area of the surface coated with the oxide film is small. The oxidizing atmosphere is, for example, an atmosphere consisting of oxygen at 5% or more and 10% or less of the oxygen partial pressure and non-oxidizing gas, at atmospheric pressure, and at room temperature. Accordingly, an amount of the oxide film 63a coating the surface can be controlled, and thus, the production rate of hydrogen can be controlled. When there is the above mentioned constraint relevant to the treatment section 5, the particle 61 is magnesium. When the above mentioned constraint relevant to the treatment section 5 is removed, the particle 61 preferably includes at least one material selected from a group consisting of materials having characteristic of emitting hydrogen in hydrolysis reaction, such as Mg, Ni, Fe, V, Mn, Ti, Cu, Ag, Ca, Zn, Zr, Co, Cr, and Al.

Next, an operation of the energy supplying system according to the first embodiment of the present invention will be described.

The water 23 is supplied to the hydrogen supplying section 2 from the water storage device not shown in the figure at the start-up of the energy supplying system 1, and from the pipe 13 after the start-up. And, hydrogen and the magnesium hydroxide 22 are produced by the reaction of the magnesium particles 21 with the water 23. The hydrogen supplying section 2 supplies hydrogen to the fuel cell 4 via the pipe 11 and supplies the slurry in which the magnesium hydroxide 22 is mixed with the water 23 to the treatment section 5 via the pipe 14, respectively. The oxygen supplying section 3 supplies oxygen to the fuel cell 4 via the pipe 12. The fuel cell 4 generates electric power and heat by using the hydrogen from the hydrogen supplying section 2 and the oxygen from the oxygen supplying section 3. In addition, water (water vapor) is produced and exhausted to the pipe 13 as emissions.

To the treatment section 5, the slurry (the magnesium hydroxide 22 + the water 23) is supplied via the pipe 14 and carbon dioxide is supplied via the pipe 16. Then, the water 23 and the magnesium carbonate 24 are produced by a reaction of the magnesium hydroxide 22 in the slurry with the carbon dioxide. The treatment section 5 supplies the slurry in which the magnesium carbonate 24 is mixed with the water 23 to the separation section 6 via the pipe 15. The separation section 6 separates the slurry (themagnesium carbonate 24 + the water 23) supplied via the pipe 15 into the magnesium carbonate 24 and the water 23. The separation section 6 solidifies and removes the magnesium carbonate 24, and delivers the water 23 to another device to reuse the water. For example, the water is stored in the above mentioned water storage device which is not shown in the figure and is reused at the start-up.

In the above mentioned energy supplying system, pumps and valves for controlling the flows of the fluids may be provided to the pipes as necessary.

In the energy supplying system according to the present invention, since the magnesium hydroxide 22 produced in the production of hydrogen is used for the treatment of carbon dioxide, a carbon dioxide removal device is not required to be provided. In addition, carbon dioxide and the magnesium hydroxide 22, which are conventionally removed as unnecessary materials, can be reused to produce useful water. That is, in the closed space 10, the increase of concentration of carbon dioxide can be suppressed and emissions can be suppressed and reused.

### (Second embodiment)

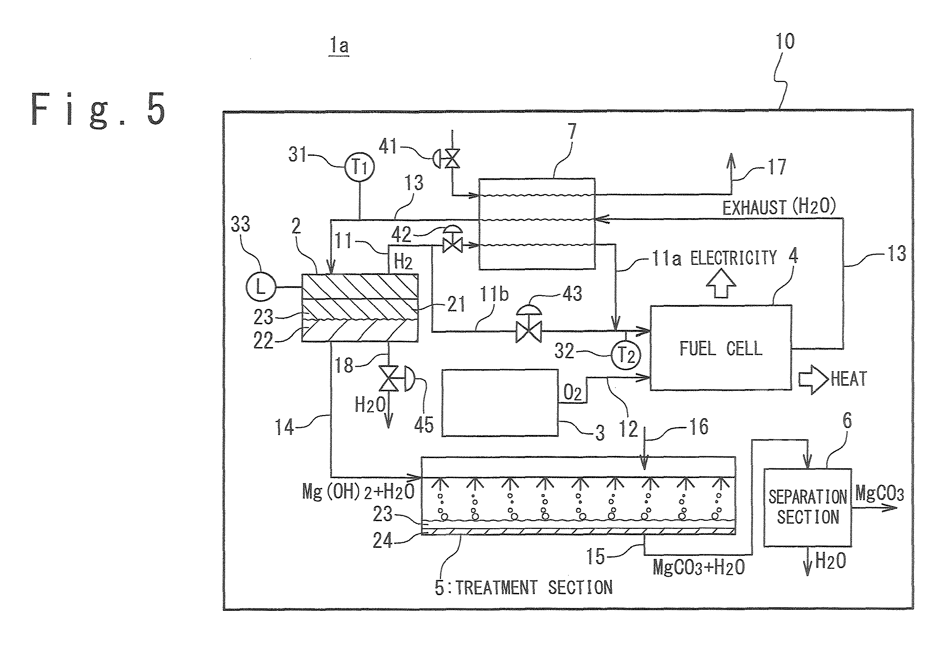

A configuration of an energy supplying system according to a second embodiment of the present invention will be described. Fig. 5 is a block diagram showing the configuration of the energy supplying system according to the second embodiment of the present invention. The energy supplying system 1a is provided in a closed space 10, and includes a hydrogen supplying section 2, an oxygen supplying section 3, a fuel cell 4, a treatment section 5, a separation section 6, a heat exchanging section 7, temperature sensors 31 and 32, a level gauge 33, flow control valves 41, 42 and 43, and a control valve 45.

A pipe 17, a pipe 13, and a pipe 11a extend in the heat exchanging section 7. A cooling medium whose flow rate is controlled by the flow control valve 41 flows through the pipe 17. Water (water vapor) emitted from the fuel cell 4 flows through the pipe 13 to be supplied to the hydrogen supplying section 2. A part of hydrogen that is delivered from the hydrogen supplying section 2 to the pipe 11 and is controlled in flow rate by the flow control valves 42 and 43 flows through the pipe 11a (the remaining flows through the pipe 11b).

The heat exchanging section 7 cools (condenses) water (water vapor: high temperature) supplied to the hydrogen supplying section 2 via the pipe 13 by heat exchange with the cooling medium (low temperature) flowing through the pipe 17. By condensing the vapor to liquid water, the production rate of hydrogen in the hydrogen supplying section 2 can be controlled more easily. Since the flow control valve 41 controls (for example, PID control) the flow rate of the cooling medium based on temperature T1 of the temperature sensor 31 provided to the pipe 13, the temperature of the water 23 in the pipe 13 can be decreased to a desired temperature.

The cooling medium (low temperature) is, for example, seawater or river water when the closed space 10 is adjacent to a sea or a river. Alternatively, oxygen for the fuel cell 4 can be used since the oxygen is required to be heated to an operation temperature. In Fig. 5, the pipe 12 is connected, for example, to the pipe 17 and all or a part of oxygen flowing in the pipe 12 is branched to the pipe 17. In this case, the cooling medium is not required to be obtained from outside of a system of the closed space 10, and thus, the energy supplying system is simplified, and its independence can be improved. Or, even when the cooling medium is insufficient, it can be supplemented with seawater or river water.

The above mentioned control (for example, PID control) of the flow control valve 41 based on the temperature T1 is executed by a control device (not shown in the figure). As described above, by supplying the water 23 in the pipe 13 to the hydrogen supplying section 2 after controlling the temperature of the water 23 to a desired temperature, the reaction of the magnesium particles 21 with the water 23 in the hydrogen supplying section 2 can be controlled. Thus, production rate of hydrogen can be controlled. That is, the control device (not shown in the figure) can calculate a required production rate of hydrogen based on the electric power to be generated by the fuel cell 4, and can control the production rate of hydrogen by controlling the temperature of the water in the hydrogen supplying section 2 to a desired temperature based on the calculated production rate of hydrogen.

The heat exchanging section 7 cools hydrogen (high temperature) supplied to the fuel cell 4 via the pipe 11a to a predetermined temperature by heat exchange with the cooling medium (low temperature) flowing through the pipe 17. In this case, another pipe 17' (not shown in the figure) in which the cooling medium (low temperature) flows may be used. Then, the flow control valves 42 and 43 work in conjunction with each other to control (for example, PID control) the flow rates of hydrogen flowing in the pipe 11a and the pipe 11b based on temperature T2 of the temperature sensor 32 provided to the pipe 11b immediately before the fuel cell 4, thus, the ratio between the flow rate of hydrogen in the pipe 11a and the flow rate of hydrogen in the pipe 11b is determined, and the temperature of hydrogen is controlled to a predetermined temperature (for example, about 80°C when the fuel cell 4 is the PEFC) at the inlet of the fuel cell 4.

The above mentioned control (for example, PID control) of the flow control valves 42 and 43 based on the temperature T2 is executedbythe control device (not shown in the figure). By supplying the hydrogen in the pipe 11 to the fuel cell 4 after controlling the temperature of the hydrogen to the predetermined temperature as describe above, heat efficiency of the fuel cell 4 can be improved and the fuel cell 4 can operate more appropriately. However, it is also possible to use the hydrogen (high temperature) flowing in the pipe 11a as heat medium for raising temperature of the water (low temperature) 23. For example, when opening of the flow control valve 42 is controlled to be wide and opening of the flow control valve 43 is controlled to be narrow, the hydrogen at high temperature can exchange heat with the water 23 at low temperature.

The hydrogen supplying section 2 is basically the same as that of the first embodiment. However, there are differences that the level gauge 33 and a pipe 18 are provided and the control valve 45 is connected to the pipe 18. The level gauge 33 measures the level of the water 23 in the hydrogen supplying section 2. The control valve 45 controls the deliver of the water 23 via the pipe 18 to another (for example, the water storage device (not shown in the figure)).

The hydrogen supplying section 2 can control the reaction of the magnesium particles 21 with the water 23 based on the level of the water 23 measured by the level gauge 33. That is, the control valve 45 is controlled (for example, PID control) based on the level of the water 23 measured by the level gauge 33 such that the amount of the water 23 which is supplied to and stored in the hydrogen supplying section 2 agree with a desired amount.

The above mentioned control (for example, PID control) of the control valve 45 based on the level of the water 23 is executedbythe control device (not shown in the figure). As described above, since the amount of the water 23 reacting with the magnesium particles 21 can be controlled by controlling the amount of the water 23 supplied to and stored in the hydrogen supplying section 2 to be the desired amount, the production rate of hydrogen can be controlled. That is, the control device (not shown in the figure) can calculate a required production rate of hydrogen based on the electric power to be generated by the fuel cell 4, and can control the production rate of hydrogen by controlling the level of the water 23 measured by the level gauge 33 to be a desired level based on the calculated production rate of hydrogen.

Since the closed space 10, the oxygen supplying section 3, the fuel cell 4, the treatment section 5, and the separation section 6 are the same as those of the first embodiment, their explanation will be omitted.

Also in the energy supplying system according to the present embodiment, the same effects with the first embodiment can be obtained. In addition, by controlling the flow rate of the cooling medium by using the flow control valve 41, temperature of water in the pipe 13 can be controlled to a desired temperature. Accordingly, the production rate of hydrogen can be controlled by controlling the reaction of the magnesium particles 21 with the water 23. Furthermore, by controlling the delivery rate of the water 23 by using the control valve 45, the level of the water 23 can be controlled to a desired level. Accordingly, the production rate of hydrogen can be controlled by controlling the reaction of the magnesium particles 21 with the water 23. The flow control valves 42 and 43 work in conjunction with each other to control the flow rates of hydrogen flowing in the pipe 11a and the pipe 11b, and thus, the temperature of hydrogen is controlled to the predetermined temperature (for example, about 80°C when the fuel cell 4 is the PEFC) at the inlet of the fuel cell 4.

Next, since the magnesium (Mg) particles used in the hydrogen supplying section 2 are the same as those of the first embodiment including the descriptions about Fig. 3 and Fig. 4, their explanation will be omitted.

Next, an operation of the energy supplying system according to the second embodiment of the present invention will be described.

The water 23 is supplied to the hydrogen supplying section 2 from the water storage device not shown in the figure at the start-up of the energy supplying system 1a, and from the pipe 13 after the start-up. And, hydrogen and the magnesium hydroxide 22 are produced by the reaction of the magnesium particles 21 with the water 23. At the start-up of the energy supplying system 1a, the amount of the water 23 is controlled to the desired amount through the above mentioned control of the control valve 45 based on the level of the water 23, and thus, the amount of the water 23 reacting with the magnesium particles 21 is controlled. Accordingly, the production rate of hydrogen can be controlled. Meanwhile, after the start-up of the energy supplying system 1a, in addition to the above mentioned control of the amount of the water 23, the temperature of water supplied to the hydrogen supplying section 2 is controlled to the desired temperature through the above mentioned control of the flow rate control valve 41 based on the temperature of the water 23, and thus the reaction of the water 23 with the magnesium particles 21 is controlled. Accordingly, the production rate of hydrogen can be controlled.

The hydrogen supplying section 2 supplies hydrogen to the fuel cell 4 via the pipe 11 and supplies the slurry in which the magnesium hydroxide 22 is mixed with the water 23 to the treatment section 5 via the pipe 14. The oxygen supplying section 3 supplies oxygen to the fuel cell 4 via the pipe 12. On this occasion, temperature of hydrogen is controlled to the predetermined temperature by the above mentioned control of the flow control valves 42 and 43 based on the temperature T2, and the hydrogen is supplied to the fuel cell 4. Accordingly, heat efficiency of the fuel cell 4 can be improved and an appropriate operation of the fuel cell 4 can be realized.
The fuel cell 4 generates electric power and heat by using hydrogen from the hydrogen supplying section 2 and oxygen from the oxygen supplying section 3. The fuel cell 4 produces water (water vapor) and exhausts the water to the pipe 13 as emissions.

The slurry (the magnesium hydroxide 22 + the water 23) is supplied via the pipe 14 to the treatment section 5, and carbon dioxide is supplied via the pipe 16 to the treatment section 5. Then, the magnesium hydroxide 22 in the slurry reacts with the carbon dioxide to produce the water 23 and the magnesium carbonate 24. The treatment section 5 supplies the slurry in which the magnesium carbonate 24 is mixed with the water 23 to the separation section 6 via the pipe 15. The separation section 6 separates the slurry (the magnesium carbonate 24 + the water 23) supplied via the pipe 15 into the magnesium carbonate 24 and the water 23. The separation section 6 solidifies and removes the magnesium carbonate 24 and delivers the water 23 to the other device to reuse the water. For example, the water is stored in the above mentioned water storage device which is not shown in the figure and is reused at the start-up.

Also in the energy supplying system according to the present embodiment, the same effect with the first embodiment can be obtained. In addition, by controlling the temperature of the water in the pipe 13 at the heat exchanging section 7 and by controlling the amount of the water 23 in the hydrogen supplying section 2, the reaction of the magnesium particles 21 with the water 23 is controlled, and thus, the production rate of hydrogen can be controlled. The flow control valves 42 and 43 work in conjunction with each other to control the flow rates of hydrogen flowing in the pipe 11a and the pipe 11b, and thus, the temperature of hydrogen is controlled to the predetermined temperature at the inlet of the fuel cell 4.

Both of the control of the temperature of the water in the pipe 13 at the heat exchanging section 7 and the control of the amount of the water 23 in the hydrogen supplying section 2 are performed in the above embodiment, however, any one of the controls can be performed. Also in that case, similar effects can be obtained.

### (Third embodiment)

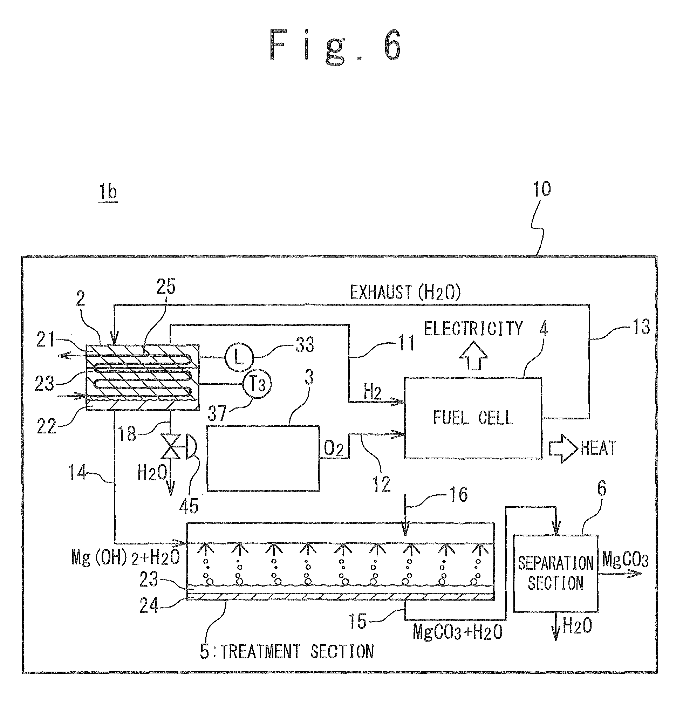

A configuration of an energy supplying system according to a third embodiment of the present invention will be described. Fig. 6 is a block diagram showing the configuration of the energy supplying system according to the third embodiment of the present invention. The energy supplying system 1b is provided in a closed space 10, and includes a hydrogen supplying section 2, an oxygen supplying section 3, a fuel cell 4, a treatment section 5, a separation section 6, a level gauge 33, a temperature sensor 37, and a control valve 45.

The hydrogen supplying section 2 is basically the same as that of the first embodiment. However, there are differences that a heat exchanging pipe 25, the level gauge 33, the temperature sensor 37, and a pipe 18 are provided and the control valve 45 is connected to the pipe 18. A heat medium flows through the heat exchanging pipe 25. The heat medium exchanges heat with the magnesium particles and the water 23 of the hydrogen supplying section 2. A heat medium temperature regulating section not shown in the figure heats or cools the heat medium based on temperature T3 of the temperature sensor 37 to control the temperature of the heat medium. As described above, the hydrogen supplying section 2 controls the temperature T3 of the magnesium particles 21 and water 23 by exchanging heat of the magnesium particles 21 and water 23 with the temperature-controlled heat medium, and thus can controls the reaction of the magnesium particles 21 with the water 23. That is, the temperature of the heat medium is controlled (for example, PID control) based on the temperature T3 of the temperature sensor 37 such that the temperatures of the magnesium particles 21 and water 23 is controlled to be a desired temperature.

The above mentioned control (for example, PID control) of the temperature of the heat medium based on the temperature T3 of the magnesium particles 21 and water 23 is executed by a control device (not shown in the figure). As described above, the reaction of the magnesium particles 21 with the water 23 can be controlled by controlling the temperature T3 of the magnesium particles 21 and water 23 to the desired temperature, and thus, production rate of hydrogen can be controlled. That is, the control device (not shown in the figure) can calculate a required production rate of hydrogen based on the electric power to be generated in the fuel cell 4, and can control the production rate of hydrogen by controlling the temperatures of the magnesium particles 21 and the water 23 in the hydrogen supplying section 2 to the desired temperature based on the calculated production rate.

The level gauge 33 measures the level of the water 23 in the hydrogen supplying section 2. The control valve 45 allows the water to be delivered to another device (for example, a water storage device (not shown in the figure)) via the pipe 18. The hydrogen supplying section 2 can control the reaction of the magnesium particles 21 with the water 23 based on the level of the water 23 measured by the level gauge 33. That is, the control valve 45 is controlled (for example, PID control) based on the level of the water 23 measured by the level gauge 33 such that amount of the water 23 supplied to and stored in the hydrogen supplying section 2 is controlled to a desired amount.

The above mentioned control (for example, PID control) of the control valve 45 based on the level of the water 23 is executedbythe control device (not shown in the figure). As described above, the amount of the water 23 which reacts with the magnesium particles 21 can be controlled to the desired amount by controlling the amount of the water 23 supplied to and stored in the hydrogen supplying section 2, and thus, the production rate of produced hydrogen can be controlled. That is, the control device (not shown in the figure) can calculate a required production rate of hydrogen based on the electric power to be generated in the fuel cell 4, and can control the production rate of hydrogen by controlling the level of the water 23 measured by the level gauge 33 to the desired level based on the calculated production rate.

Since the closed space 10, the oxygen supplying section 3, the fuel cell 4, the treatment section 5, and the separation section 6 are the same as those of the first embodiment, their explanation will be omitted.

Also in the energy supplying system according to the present embodiment, the same effect with the first embodiment can be obtained. In addition, the reaction of the magnesium particles 21 with the water 23 is controlled by controlling the temperature of the heat medium in the pipe 25, and thus, the production rate of hydrogen can be controlled. Furthermore, the control valve 45 controls delivery rate of the water 23, and thus, the level of the water 23 can be controlled to a desired level. Accordingly, the production rate of hydrogen can be controlled by controlling the reaction of the magnesium particles 21 with the water 23.

Next, since the magnesium (Mg) particles used in the hydrogen supplying section 2 are the same as those of the first embodiment including the descriptions about Fig. 3 and Fig. 4, their explanation will be omitted.

Next, an operation of the energy supplying system according to the third embodiment of the present invention will be described.

The water 23 is supplied to the hydrogen supplying section 2 from a water storage device not shown in the figure at the start-up of the energy supplying system 1b, and from the pipe 13 after the start-up. And, hydrogen and the magnesium hydroxide 22 are produced by the reaction of the magnesium particles 21 with the water 23. At this time, the amount of the water 23 is controlled to a desired amount through the above mentioned control of the control valve 45 based on the level of the water 23, and thus, the amount of the water 23 reacting with the magnesium particles 21 is controlled. In addition, temperatures of the magnesium particles 21 and the water 23 are controlled through the above mentioned control of the temperature of the heat medium in the pipe 25. At least one of them enables the control of the production rate of hydrogen.

The hydrogen supplying section 2 supplies hydrogen to the fuel cell 4 via the pipe 11 and supplies the slurry in which the magnesium hydroxide 22 is mixed with the water 23 to the treatment section 5 via the pipe 14. The oxygen supplying section 3 supplies oxygen to the fuel cell 4 via the pipe 12. The fuel cell 4 generates electric power and heat by using hydrogen from the hydrogen supplying section 2 and oxygen from the oxygen supplying section 3. The fuel cell 4 produces water (water vapor) and exhausts the water to the pipe 13 as emissions.

The slurry (the magnesium hydroxide 22 + the water 23) is supplied via the pipe 14 to the treatment section 5, and carbon dioxide is supplied via the pipe 16 to the treatment section 5. Then, the magnesium hydroxide 22 in the slurry reacts with the carbon dioxide to produce the water 23 and the magnesium carbonate 24. The treatment section 5 supplies the slurry in which the magnesium carbonate 24 is mixed with the water 23 to the separation section 6 via the pipe 15. The separation section 6 separates the slurry (the magnesium carbonate 24 + the water 23) supplied via the pipe 15 into the magnesium carbonate 24 and the water 23. The separation section 6 solidifies and removes the magnesium carbonate 24 and delivers the water 23 to the other device to reuse the water. For example, the water is stored in the above mentioned water storage device which is not shown in the figure and is reused at the start-up.

Also in the energy supplying system according to the present embodiment, the same effect with the first embodiment can be obtained. In addition, the reaction of the magnesium particles 21 with the water 23 is controlled by controlling the temperatures of the magnesium particles and the water 23 by using the heat medium and by controlling the amount of the water 23 in the hydrogen supplying section 2, and thus, the production rate of hydrogen can be controlled.

Both of the control of the temperatures of the magnesium particles 21 and the water 23 by using the heat medium and the control of the amount of the water 23 in the hydrogen supplying section 2 are performed in the above embodiment, however, any one of the controls can be performed. Also in that case, similar effects can be obtained.

### (Fourth embodiment)

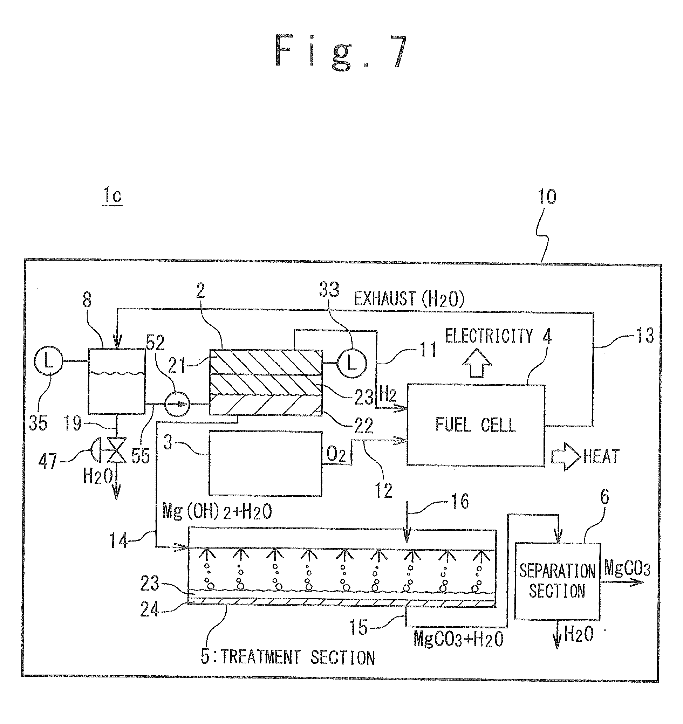

A configuration of an energy supplying system according to a fourth embodiment of the present invention will be described. Fig. 7 is a block diagram showing the configuration of the energy supplying system according to the fourth embodiment of the present invention.
The energy supplying system 1c is provided in a closed space 10, and includes a hydrogen supplying section 2, an oxygen supplying section 3, a fuel cell 4, a treatment section 5, a separation section 6, a water storage section 8, a level gauge 33, a level gauge 35, a control valve 47, and a pump 52.

Water (H₂O) included in the exhaust from the fuel cell 4 is supplied to the water storage section 8 via the pipe 13. The pump 52 is connected to a pipe 55 and supplies the water to the hydrogen supplying section 2. The water storage section 8 includes the control valve 47 via the level gauge 35 and a pipe 19, and opens the control valve 47 to deliver the water 23 from the inside to another device (for example, a water storage device (not shown in the figure)) via the pipe 19 when the level gauge 35 detects that the amount of the inside water 23 is a predetermined amount or more.

The hydrogen supplying section 2 is basically the same as that of the first embodiment. However, there are differences that the exhaust (water) of the fuel cell 4 is not directly received but is received via the pipe 55 after once stored in the water storage section 8 and that the level gauge 33 is provided. The level gauge 33 measures a level of the water 23 in the hydrogen supplying section 2.

The hydrogen supplying section 2 can control the reaction of the magnesium particles 21 with the water 23 based on the level of the water 23 measured by the level gauge 33. That is, the pump 52 is controlled (for example, PID control) based on the level of the water 23 measured by the level gauge 33 such that amount of the water 23 supplied to and stored in the hydrogen supplying section 2 is controlled to a desired amount. For example, delivery rate (flow rate) of the water 23 is controlled through rotation speed of the pump 52 or on and off of the pump 52.

The above mentioned control (for example, PID control) of the pump 52 based on the level of the water 23 is executed by a control device (not shown in the figure). As described above, since the amount of the water 23 reacting with the magnesium particles 21 can be controlled to be a desired amount by controlling the amount of the water 23 supplied to and stored in the hydrogen supplying section 2, the production rate of hydrogen can be controlled. That is, the control device (not shown in the figure) can calculate required production rate of hydrogen based on the electric power to be generated in the fuel cell 4, and can control the production rate of hydrogen by controlling the level of the water 23 measured by the level gauge 33 to a desired level based on the calculated production rate of hydrogen.

Since the closed space 10, the oxygen supplying section 3, the fuel cell 4, the treatment section 5, and the separation section 6 are the same as those of the first embodiment, their explanation will be omitted.

Also in the energy supplying system according to the present embodiment, the same effect with the first embodiment can be obtained. In addition, the production rate of hydrogen can be controlled by controlling the reaction of the magnesium particles 21 with the water 23 through the control in which the water from the fuel cell 4 is once stored in the water storage section 8 and the desired amount of water is supplied to the hydrogen supplying section 2.

Next, since the magnesium (Mg) particles 21 used in the hydrogen supplying section 2 are the same as those of the first embodiment including the descriptions about Fig. 3 and Fig. 4, their explanation will be omitted.

Next, an operation of the energy supplying system according to the fourth embodiment of the present invention will be described.

The water 23 is supplied from the water storage section 8 to the hydrogen supplying section 2 both at the start-up and after the start-up of the energy supplying system 1c. And, hydrogen and the magnesium hydroxide 22 are produced by the reaction of the magnesium particles 21 with the water 23. At this time, the amount of the water 23 is controlled to a desired amount through the above mentioned control of the pump 52 based on the level of the water 23, and thus, the amount of the water 23 reacting with the magnesium particles 21 is controlled. Accordingly, the production rate of hydrogen can be controlled.

The hydrogen supplying section 2 supplies hydrogen to the fuel cell 4 via the pipe 11 and supplies the slurry in which the magnesium hydroxide 22 is mixed with the water 23 to the treatment section 5 via the pipe 14. The oxygen supplying section 3 supplies oxygen to the fuel cell 4 via the pipe 12. The fuel cell 4 generates electric power and heat by using hydrogen from the hydrogen supplying section 2 and oxygen from the oxygen supplying section 3. The fuel cell 4 produces water (water vapor) and exhausts the water to the pipe 13 as emissions.

The slurry (the magnesium hydroxide 22 + the water 23) is supplied via the pipe 14 to the treatment section 5, and carbon dioxide is supplied via the pipe 16 to the treatment section 5. Then, the magnesium hydroxide 22 in the slurry reacts with the carbon dioxide to produce the water 23 and the magnesium carbonate 24. The treatment section 5 supplies the slurry in which the magnesium carbonate 24 is mixed with the water 23 to the separation section 6 via the pipe 15. The separation section 6 separates the slurry (the magnesium carbonate 24 + the water 23) supplied via the pipe 15 into the magnesium carbonate 24 and the water 23. The separation section 6 solidifies and removes the magnesium carbonate 24 and delivers the water 23 to the other device to reuse the water. For example, the water is stored in the above mentioned water storage device which is not shown in the figure and is reused at the start-up.

Also in the energy supplying system according to the present embodiment, the same effect with the first embodiment can be obtained. In addition, the reaction of the magnesium particles 21 with the water 23 is controlled through the control of the amount of the water 23 in the hydrogen supplying section2 by the pump 52, and thus, the production rate of hydrogen can be controlled.

### (Fifth embodiment)

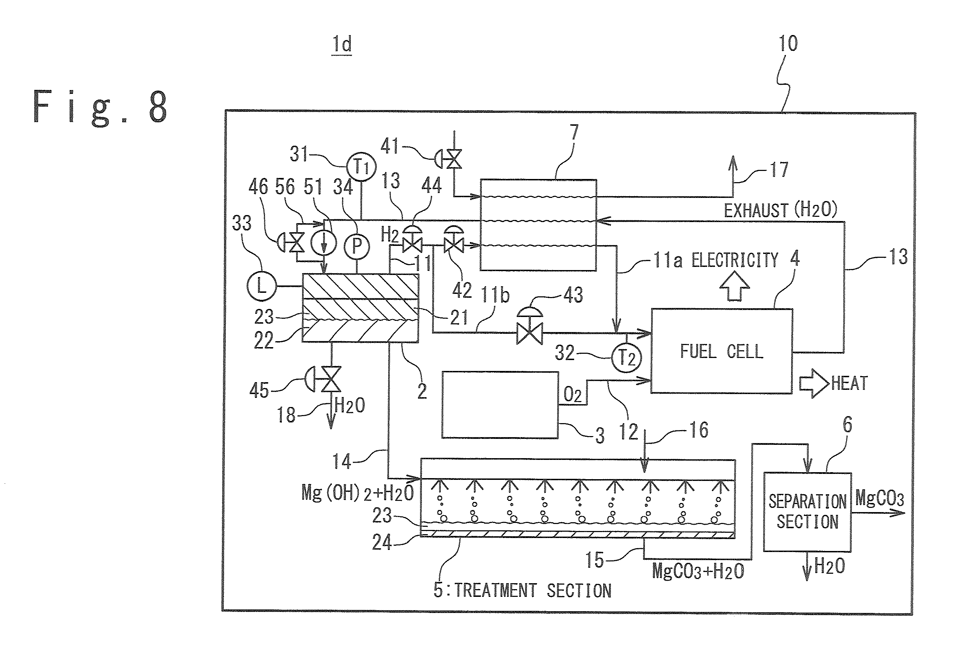

A configuration of an energy supplying system according to a fifth embodiment of the present invention will be described. Fig. 8 is a block diagram showing the configuration of the energy supplying system according to the fifth embodiment of the present invention. The energy supplying system 1d is provided in a closed space 10, and includes a hydrogen supplying section 2, an oxygen supplying section 3, a fuel cell 4, a treatment section 5, a separation section 6, a heat exchanging section 7, temperature sensors 31 and 32, a level gauge 33, a pressure gauge 34, flow control valves 41, 42, and 43, control valve 45, pressure regulating valves 44 and 46, and a pressure pump 51.

The hydrogen supplying section 2 is basically the same as that of the second embodiment. However, there are differences that the pressure gauge 34 is provided, that the pressure pump 51 is connected to the pipe 13, and that the pressure regulating valve 44 is connected to the pipe 11. The pressure gauge 34 measures pressure of the hydrogen supplying section 2. The pressure pump 51 increases the pressure of the water 23 supplied from the fuel cell 4 to a desired pressure and supplies the water to the hydrogen supplying section 2. The pressure regulating valve 44 decreases the pressure of hydrogen supplied from the hydrogen supplying section 2 to an operation pressure of the fuel cell 4 and supplies the hydrogen to the fuel cell 4 via the pipes 11a and 11b. The pressure regulating valve 46 is provided to a pipe 56 bypassing the pressure pump 51 and is opened as needed.

The hydrogen supplying section 2 can control the reaction of the magnesium particles 21 with the water 23 based on the pressure of the hydrogen supplying section 2 measured by the pressure gauge 34. That is, the pressure pump 51 is controlled (for example, PID control) based on the pressure of the hydrogen supplying section 2 such that the pressure of the water 23 supplied to and stored in the hydrogen supplying section 2 is controlled to the desired pressure.

The above mentioned control (for example, PID control) of the pressure pump 51 based on the pressure of the hydrogen supplying section 2 is executed by a control device (not shown in the figure). As described above, since the reaction of the magnesium particles 21 with the water 23 can be controlled by controlling the pressure of the water 23 supplied to and stored in the hydrogen supplying section 2 to be the desired pressure, the production rate of hydrogen can be controlled.
That is, the control device (not shown in the figure) can calculate required production rate of hydrogen based on the electric power to be generated in the fuel cell 4, and can control the production rate of hydrogen by controlling the pressure of the hydrogen supplying section 2 measured by the pressure gauge 34 to the desired pressure based on the calculated production rate of hydrogen.

Since the closed space 10, the oxygen supplying section 3, the fuel cell 4, the treatment section 5, the separation section 6, the heat exchanging section 7, the temperature sensors 31 and 32, the level gauge 33, the flow control valves 41, 42, and 43, and the control valve 45 are the same as those of the second embodiment, their explanation will be omitted.

Also in the energy supplying system according to the present embodiment, the same effect with the second embodiment can be obtained. In addition, the pressure of the water 23 in the hydrogen supplying section 2 can be controlled to the desired pressure through the control of the pressure of water in the pipe 13 by the pressure pump 51. Thus, the reaction of the magnesium particles 21 with the water 23 can be controlled and the production rate of hydrogen can be controlled.

Next, since the magnesium (Mg) particles 21 used in the hydrogen supplying section 2 are the same as those of the second embodiment including the description about Fig. 3 and Fig. 4, their explanation will be omitted.

Next, an operation of the energy supplying system according to the fifth embodiment of the present invention will be described.

The water 23 is supplied to the hydrogen supplying section 2 from a water storage device not shown in the figure at the start-up of the energy supplying system 1d, and from the pipe 13 after the start-up. And, hydrogen and the magnesium hydroxide 22 are produced by the reaction of the magnesium particles 21 with the water 23. At the start-up of the energy supplying system 1d, the amount of the water 23 is controlled to the desired amount through the above mentioned control (of the second embodiment) of the control valve 45 based on the level of the water 23, and thus, the amount of the water 23 reacting with the magnesium particles 21 is controlled. Accordingly, the production rate of hydrogen can be controlled. Meanwhile, after the start-up of the energy supplying system 1d, in addition to the above mentioned control of the amount of the water 23, the temperature of water supplied to the hydrogen supplying section 2 is controlled to the desired temperature through the above mentioned control (of the second embodiment) of the flow rate control valve 41 based on the temperature of the water 23, and the pressure of the water 23 in the hydrogen supplying section 2 is controlled to the desired pressure through the control of the pressure pump 51 based on the pressure of the hydrogen supplying section 2. Thus, the reaction of the water 23 with the magnesium particles 21 is controlled. Accordingly, the production rate of hydrogen can be controlled.

The hydrogen supplying section 2 supplies hydrogen to the fuel cell 4 via the pipe 11 and supplies the slurry in which the magnesium hydroxide 22 is mixed with the water 23 to the treatment section 5 via the pipe 14. The oxygen supplying section 3 supplies oxygen to the fuel cell 4 via the pipe 12. On this occasion, temperature of hydrogen is controlled to the predetermined temperature by the above mentioned control of the flow control valves 42 and 43 based on the temperature T2, and the hydrogen is supplied to the fuel cell 4. Accordingly, heat efficiency of the fuel cell 4 can be improved and an appropriate operation of the fuel cell 4 can be realized. The fuel cell 4 generates electric power and heat by using hydrogen from the hydrogen supplying section 2 and oxygen from the oxygen supplying section 3. The fuel cell 4 produces water (water vapor) and exhausts the water to the pipe 13 as emissions.

The slurry (the magnesium hydroxide 22 + the water 23) is supplied via the pipe 14 to the treatment section 5, and carbon dioxide is supplied via the pipe 16 to the treatment section 5. Then, the magnesium hydroxide 22 in the slurry reacts with the carbon dioxide to produce the water 23 and the magnesium carbonate 24. The treatment section 5 supplies the slurry in which the magnesium carbonate 24 is mixed with the water 23 to the separation section 6 via the pipe 15. The separation section 6 separates the slurry (the magnesium carbonate 24 + the water 23) supplied via the pipe 15 into the magnesium carbonate 24 and the water 23. The separation section 6 solidifies and removes the magnesium carbonate 24 and delivers the water 23 to the other device to reuse the water. For example, the water is stored in the above mentioned water storage device which is not shown in the figure and is reused at the start-up.

Also in the energy supplying system according to the present embodiment, the same effect with the second embodiment can be obtained. In addition, the pressure of the water 23 in the hydrogen supplying section 2 is controlled to the desired pressure through the control of the pressure of water in the pipe 13 by the pressure pump 51, and thus, the production rate of hydrogen can be controlled.

All of the control of the temperature of the water 23 in the pipe 13 at the heat exchanging section 7, the control of the amount of the water 23 in the hydrogen supplying section 2, and the control of the pressure of the water 23 are performed in the above embodiment, however, any one of the controls can be performed. Also in that case, similar effects can be obtained.

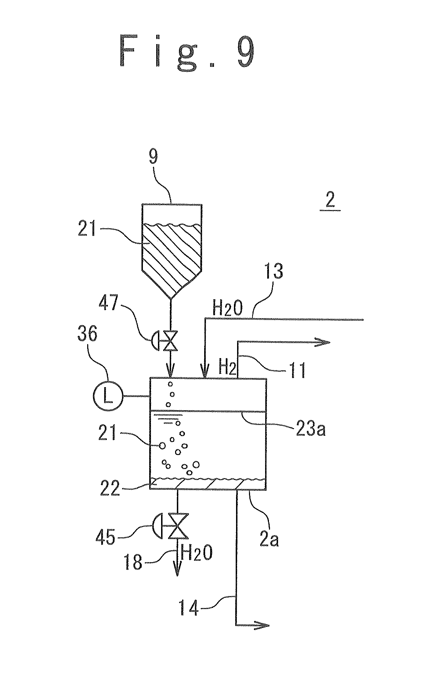

In the above mentioned first, second, third and fifth embodiments, the hydrogen supplying section 2 may employ a following configuration. Fig. 9 is a schematic diagram showing another configuration of the hydrogen supplying section 2. The hydrogen supplying section 2 includes a particle supplying section 9, a particle supplying mechanism 47 and a hydrogen producing section 2a, and the control valve 45 is connected to the hydrogen supplying section 2 via the level gauge 36 and the pipe 18.

The hydrogen producing section 2a stores the water 23 supplied from the pipe 13. The level gauge 36 detects a level 23a of water in the hydrogen producing section 2a. The control valve 45 is opened to deliver the inside water 23 to another device (for example, water storage device (not shown in the figure)) via the pipe 18 when the level is a predetermined height or more.

The particle supplying section 9 retains the magnesium particles 21. The particle supplying mechanism 47 is a feeder for example, and supplies the magnesium particles 21 in the particle supplying section 9 to the hydrogen producing section 2a. A control device (not shown in the figure) calculates required production rate of hydrogen based on electric power to be generated by the fuel cell 4. And, the particle supplying mechanism 47 is controlled based on the calculated production rate of hydrogen such that desired amount of the magnesium particles 21 is delivered to the hydrogen producing section 2a. The hydrogen producing section 2a produces hydrogen at the required production rate and the magnesium hydroxide 22 by the reaction of the delivered magnesium particles 21 with the stored water 23. The hydrogen producing section 2a delivers the hydrogen to the fuel cell 4 and the magnesium hydroxide 22 to the treatment section 5.

Since the hydrogen supplying section does not supply the water 23 to the magnesium particles 21 but supply the magnesium particles 21 to the water 23, the supplied magnesium particles 21 can certainly contribute to the reaction. Therefore, the production rate of hydrogen can be controlled precisely.

### (Sixth embodiment)

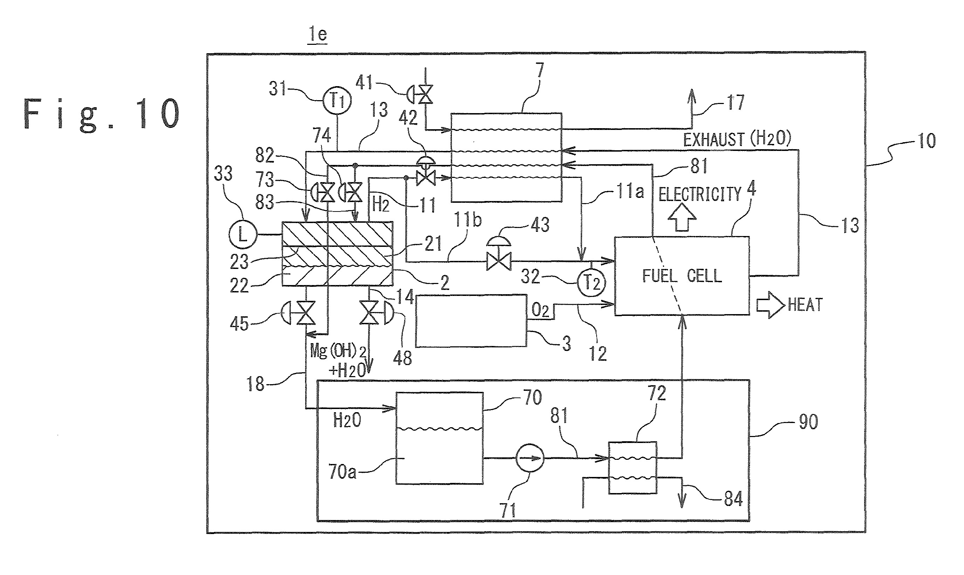

A configuration of an energy supplying system according to a sixth embodiment of the present invention will be described. Fig. 10 is a block diagram showing a configuration of the energy supplying system according to the sixth embodiment of the present invention. The energy supplying system 1e is provided in a closed space 10, and includes a hydrogen supplying section 2, an oxygen supplying section 3, a fuel cell 4, a heat exchanging section 7, a temperature sensors 31 and 32, a level gauge 33, flow control valves 41, 42, 43, 73 and 74, control valves 45 and 48, and a cooling section 90.

A pipe 17, a pipe 13, a pipe 81 and a pipe 11a extend in the heat exchanging section 7. A cooling medium whose flow rate is controlled by the flow control valve 41 flows through the pipe 17. Water (water vapor) emitted from the fuel cell 4 flows through the pipe 13 to be supplied to the hydrogen supplying section 2. Water (cooling medium) supplied from the cooling section 90 in order to cool the fuel cell 4 flows through the pipe 81 after passing the fuel cell 4. A part of hydrogen that is delivered from the hydrogen supplying section 2 to the pipe 11 and is controlled in flow rate by the flow control valves 42 and 43 flows through the pipe 11a (the remaining flows through the pipe 11b). The cooling medium in the pipe 17 cools the fluids passing through the pipe 13, the pipe 81, and the pipe 11a.

The heat exchanging section 7 cools (condenses) water (water vapor: high temperature) supplied to the hydrogen supplying section 2 via the pipe 13 by heat exchange with the cooling medium (low temperature) flowing through the pipe 17. By condensing the vapor to liquid water and by controlling the temperature of the liquid water, the production rate of hydrogen in the hydrogen supplying section 2 can be controlled more easily. Since the flow control valve 41 controls (for example, PID control) the flow rate of the cooling medium based on temperature T1 of the temperature sensor 31 provided to the pipe 13, the temperature of the water 23 in the pipe 13 can be decreased to a desired temperature.

The cooling medium (low temperature) is, for example, seawater or river water when the closed space 10 is adjacent to a sea or a river. Alternatively, oxygen for the fuel cell 4 can be used since the oxygen is required to be heated to an operation temperature. In Fig. 10, the pipe 12 is connected, for example, to the pipe 17 and all or a part of oxygen flowing in the pipe 12 is branched to the pipe 17. In this case, the cooling medium is not required to be obtained from outside of a system of the closed space 10, and thus, the energy supplying system is simplified, and its independence can be improved. Or, even when the cooling medium is insufficient, it can be supplemented with seawater or river water.

The above mentioned control (for example, PID control) of the flow control valve 41 based on the temperature T1 is executed by a control device (not shown in the figure). As described above, by supplying the water 23 in the pipe 13 to the hydrogen supplying section 2 after controlling the temperature of the water 23 to a desired temperature, the reaction of the magnesium particles 21 with the water 23 in the hydrogen supplying section 2 can be controlled. Thus, production rate of hydrogen can be controlled. That is, the control device (not shown in the figure) can calculate a required production rate of hydrogen based on the electric power to be generated by the fuel cell 4, and can control the production rate of hydrogen by controlling the temperature of the water in the hydrogen supplying section 2 to a desired temperature based on the calculated production rate of hydrogen.

In addition, the heat exchanging section 7 cools hydrogen (high temperature) supplied to the fuel cell 4 via the pipe 11a to a predetermined temperature by heat exchange with the cooling medium (low temperature) flowing through the pipe 17. In this case, another pipe 17' (not shown in the figure) in which the cooling medium (low temperature) flows may be used. Then, the flow control valves 42 and 43 work in conjunction with each other to control (for example, PID control) the flow rates of hydrogen flowing in the pipe 11a and the pipe 11b based on temperature T2 of the temperature sensor 32 provided to the pipe 11b immediately before the fuel cell 4, thus, the ratio between the flow rate of hydrogen in the pipe 11a and the flow rate of hydrogen in the pipe 11b is determined, and the temperature of hydrogen is controlled to a predetermined temperature (for example, about 80°C when the fuel cell 4 is the PEFC) at the inlet of the fuel cell 4.

The above mentioned control (forexample, PID control) of the flow control valves 42 and 43 based on the temperature T2 is executed by the control device (not shown in the figure). By supplying the hydrogen in the pipe 11 to the fuel cell 4 after controlling the temperature of the hydrogen to the predetermined temperature as describe above, heat efficiency of the fuel cell 4 can be improved and the fuel cell 4 can operate more appropriately. However, it is also possible to use the hydrogen (high temperature) flowing in the pipe 11a as heat medium for raising temperature of the water (low temperature) 23. For example, when opening of the flow control valve 42 is controlled to be wide and opening of the flow control valve 43 is controlled to be narrow, the hydrogen at high temperature can exchange heat with the water 23 at low temperature.

In addition, the heat exchanging section 7 cools the water (high temperature) that is supplied from the cooling section 90 via the pipe 81 and cools the fuel cell 4 by exchanging heat with the cooling medium passing the pipe 17. The cooled water is returned to the cooling section 90 via the flow control valve 73, the pipe 82, and the pipe 18 when the fuel cell 4 normally operates.

On the other hand, the cooled water is supplied to the hydrogen supplying section 2 via the flow control valve 74 and the pipe 83 when an operational state of the fuel cell 4 is in a predetermined operational condition. The predetermined operational condition is a operational condition that the hydrogen supplying section 2 cannot produce hydrogen at a production rate required for the operation of the fuel cell 4 because of shortage of water. For example, that occurs when exhaust does not include water since the fuel cell does not generate electricity such as when the fuel cell 4 starts-up. Or, for example, that occurs when the amount of water in the exhaust is insufficient because load of the fuel cell 4 changes rapidly. Also in this case, the fuel cell 4 can be operated without shortage of water and without the resulting shortage of hydrogen since the water for cooling the fuel cell 4 is diverted.

The above mentioned operational state of the fuel cell 4 can be judged, for example, by measuring output (electric current or voltage) of the fuel cell with using a measuring instrument (not shown in the figure) , by obtaining magnitude of the output or change in the output per unit time with using a control section (not shown in the figure) such as computer, and by comparing the magnitude or the change with a standard value. For example, it is judged as a stopped state when the magnitude of the output (electric current or voltage) of the fuel cell is smaller than a predetermined standard value, and it is judged as a start-up operation of the fuel cell 4 when the fuel cell 4 starts its operation from that state. For example, it is judged as beginning of rapid change of the load when the change in the output (electric current or voltage) of the fuel cell per unit time is positive and larger than a predetermined standard value. As described above, when the operational state of the fuel cell 4 is the predetermined operational condition, the control section (not shown in the figure) controls the flow control valves 73 and 74 to branch water of a flow rate appropriate to the operational condition from the pipe 81 and to supply the water to the hydrogen supplying section 2.

As for the flow rate of water appropriate to the operational state, in case of the start-up of the fuel cell 4, it can be considered that water is caused to flow during the start-up at a constant flow rate which is set in advance (and stored in the control section), or that the flow rate is increased at a predetermined rate (stored in the control section), for example. Meanwhile, in case of the rapid change of the load, for example, it can be considered that water caused to flow at a predetermined flow rate (stored in the control section) proportional to the change per unit time in the output (electric current or voltage) of the fuel cell. These controls are executed based on programs of the control section.

The hydrogen supplying section 2 is basically the same as that of the first embodiment. However, there are differences that the level gauge 33, the pipe 18, and the pipe 14 are provided and that the control valves 45 and 48 are connected to the pipes 18 and 14, respectively. The level gauge 33 measures the level of the water 23 in the hydrogen supplying section 2. The control valve 45 controls the deliver of the water 23 from the hydrogen supplying section 2 to the cooling section 90 via the pipe 18. The control valve 48 controls the deliver of the magnesium hydroxide 22 from the hydrogen supplying section 2 to another device (for example, the treatment section 5) via the pipe 14.

The hydrogen supplying section 2 can control the reaction of the magnesium particles 21 with the water 23 based on the level of the water 23 measured by the level gauge 33. That is, the control valve 45 is controlled (for example, PID control) based on the level of the water 23 measured by the level gauge 33 such that the amount of the water 23 which is supplied to and stored in the hydrogen supplying section 2 agree with a desired amount. However, it may be performed by using the control valve 48.

The above mentioned control (for example, PID control) of the control valve 45 (or the control valve 48) based on the level of the water 23 is executed by the control device (not shown in the figure). As described above, since the amount of the water 23 reacting with the magnesium particles 21 can be controlled by controlling the amount of the water 23 supplied to and stored in the hydrogen supplying section 2 to be the desired amount, the production rate of hydrogen can be controlled. That is, the control device (not shown in the figure) can calculate a required production rate of hydrogen based on the electric power to be generated by the fuel cell 4, and can control the production rate of hydrogen by controlling the level of the water 23 measured by the level gauge 33 to be a desired level based on the calculated production rate of hydrogen.

The cooling section 90 circulates water for cooling the fuel cell 4 by using a circulation flow path including the pipe 81, the flow control valve 73, the pipe 82, and the pipe 18. On this occasion, the water flowing in the pipe 81 absorbs heat generated in the fuel cell 4 provided in the middle of the pipe 81. The heat is absorbed by the heat exchanging section 7 provided in the middle of the pipe 81. As already described, depending on the operational state of the fuel cell 4, the water for cooling is supplied to the hydrogen supplying section 2 via the flow control valve 74 and the pipe 83 which are connected in the middle of the pipe 81.

The cooling section 90 includes, for example, a cooling water storage section 70, a cooling water circulation pump 71, and a cooling water heat exchanger 72. The cooling water storage section 70 stores water 70a for cooling the fuel cell 4. The cooling water circulation pump 71 circulates the water 70a in the circulation flow path. The flow rate of the water circulated in the circulation flow path is controlled by the control section (not shown in the figure). The cooling water heat exchanger 72 cools the water 70a by using cooling medium (for example, sea water) flowing in the pipe 84.

Since the closed space 10, the oxygen supplying section 3, and the fuel cell 4 are the same as those of the first embodiment, their explanation will be omitted.

In the energy supplying system according to the present embodiment, since hydrogen is produced in the hydrogen supplying section 2 by using water in the exhaust from the fuel cell 4, a supplying device of water is not required to be provided. For this reason, the system is effective as a device used in the closed space 10 such as facility in the universe and vehicle. In addition, when hydrogen is suddenly needed depending on an operational condition of the fuel cell 4, there is sometimes a case that hydrogen cannot be produced sufficiently in the hydrogen supplying section 2 from only water in the exhaust from the fuel cell 4. The case can be solved by causing a partial flow of the water for cooling the fuel cell 4 to be branched to the hydrogen supplying section 2. Accordingly, also in this case, a supplying device of water is not required to be provided and the system is effective as a device used in the closed space.

In the energy supplying system according to the present embodiment, by controlling the flow rate of the cooling medium by using the flow control valve 41, temperature of water in the pipe 13 can be controlled to a desired temperature. Accordingly, the reaction of the magnesium particles 21 with the water 23 is controlled and the production rate of hydrogen can be controlled. Furthermore, by controlling the delivery amount of the water 23 by using the control valve 45, the level of the water 23 can be controlled to a desired level. Accordingly, the reaction of the magnesium particles 21 with the water 23 and the production rate of hydrogen can be controlled. The flow control valves 42 and 43 work in conjunction with each other to control the flow rates of hydrogen flowing in the pipe 11a and the pipe 11b, and thus, the temperature of hydrogen is controlled to the predetermined temperature (for example, about 80°C when the fuel cell 4 is the PEFC) at the inlet of the fuel cell 4.

Next, since the magnesium (Mg) particles used in the hydrogen supplying section 2 are the same as those of the first embodiment including the descriptions about Fig. 3 and Fig. 4, their explanation will be omitted.

Next, an operation of the energy supplying system according to the sixth embodiment of the present invention will be described.

At the start-up of the energy supplying system 1e, the control section (not shown in the figure) opens the flow control valve 74 and starts controlling the flow rate of water supplied to the hydrogen supplying section 2. At the same time, the control section causes the cooling water circulation pump 71 of the cooling section 90 to operate. Accordingly, the water 70a at the controlled flow rate is supplied to the hydrogen supplying section 2 as the water 23 via the pipe 81, the flow control valve 74, and the pipe 83. The hydrogen supplying section 2 produces hydrogen of which the flow rate is controlled and the magnesium hydroxide 22 by the reaction of the water 23 of which the flow rate is controlled with the magnesium particles 21. The control section controls the flow control valves 42 and 43 in the pipe 11 to supply hydrogen from the hydrogen supplying section 2 to the fuel cell 4. At the same time, the oxygen supplying section 3 supplies oxygen to the fuel cell 4 via the pipe 12. The fuel cell 4 generates electric power and heat by the reaction of the hydrogen with the oxygen. When detecting the generation of electric power, the control section (not shown in the figure) opens the flow control valve 73 and starts cooling of the fuel cell 4 while controlling the flow rate. The water produced by the reaction begins to be supplied to the hydrogen supplying section 2 via the pipe 13.

After the finish of the start-up of the energy supplying system 1e, the control section (not shown in the figure) closes the flow control valve 74. The water 70a from the cooling section 90 is used only for cooling the fuel cell 4. The hydrogen supplying section 2 is supplied with the water 23 from the pipe 13 and produces hydrogen and the magnesium hydroxide 22 by the reaction of the water 23 with the magnesium particles 21. On this occasion, the control section controls the amount of the water 23 to a desired amount through the above mentioned control of the control valve 45 based on the level of the water 23, and thus, controls the amount of the water 23 reacting with the magnesium particles 21. Accordingly, the production rate of hydrogen can be controlled. Furthermore, by the above mentioned control of the flow control valve 41 based on the temperature of the water 23 in addition to the above mentioned control of the amount of the water 23, temperature of water supplied to the hydrogen supplying section 2 is controlled to a desired temperature, and thus, the reaction of the water 23 with the magnesiumparticles 21 is controlled. Accordingly, the production rate of hydrogen can be controlled. The control section causes the valve to allow the slurry in which the magnesium hydroxide 22 is mixed with the water 23 to be delivered to outside via the pipe 14. The fuel cell 4 generates electric power and heat by using hydrogen from the hydrogen supplying section 2 and oxygen from the oxygen supplying section 3. In addition, the fuel cell 4 produces water (water vapor) as emissions and exhausts the water to the pipe 13. On this occasion, temperature of hydrogen is controlled to a predetermined temperature and the hydrogen is supplied to the fuel cell 4 by the above mentioned control of the flow control valves 42 and 43 based on the temperature T2. Accordingly, heat efficiency of the fuel cell 4 can be improved and an appropriate operation of the fuel cell 4 can be realized.

Here, when detecting a rapid change (rise) of the load connected to the fuel cell 4, the control section executes the following operation. That is, the control section opens the flow control valve 74 based on the magnitude of the change of load and starts controlling the flow rate of water supplied to the hydrogen supplying section 2. Consequently, the water 70a of which the flow rate is controlled is additionally supplied to the hydrogen supplying section 2. The hydrogen supplying section 2 is supplied with the water 70a from the pipe 81 in addition to the water 23 from the pipe 13, and can produce a plenty of hydrogen and the magnesium hydroxide 22 by the reaction of the water with the magnesium particles 21. Even in the rapid change (rise) of the load, the fuel cell 4 can generate sufficient electric power by using the plenty of hydrogen. At this time, the flow control valve 73 is open and the fuel cell 4 is continuously cooled.

As described above, in the present embodiment, required amount of hydrogen can be stably produced and supplied in the closed space without depending on the operational state such as the start-up and the rapid change of load.

### (Seventh embodiment)

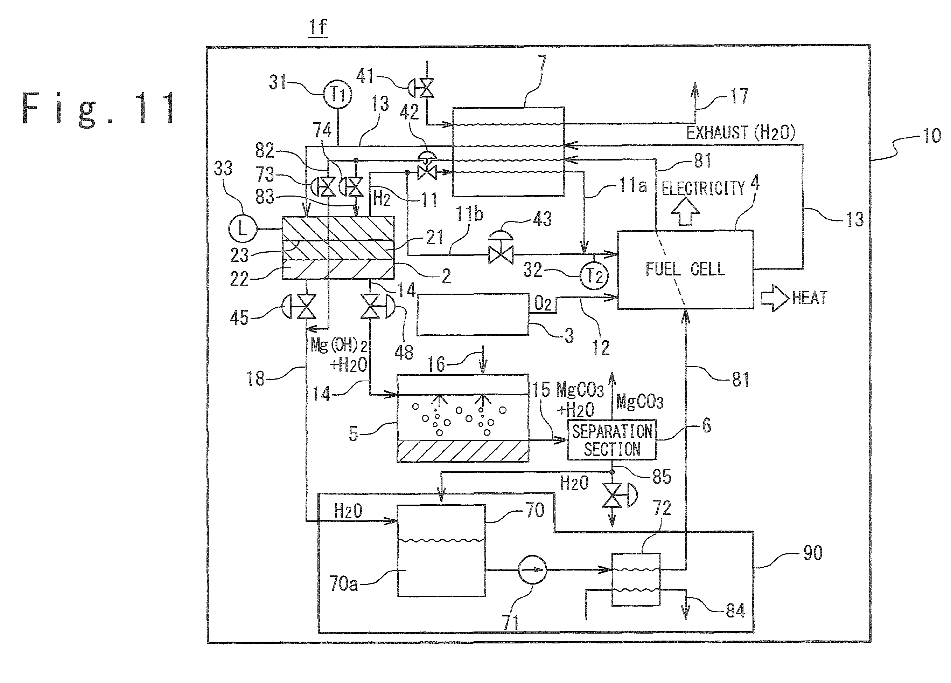

A configuration of an energy supplying system according to a seventh embodiment of the present invention will be described. Fig. 11 is a block diagram showing the configuration of the energy supplying system according to the seventh embodiment of the present invention. The energy supplying system 1f is provided in a closed space 10, and includes a hydrogen supplying section 2, an oxygen supplying section 3, a fuel cell 4, a treatment section 5, a separation section 6, a heat exchanging section 7, a temperature sensors 31 and 32, a level gauge 33,a flow control valves 41, 42, 43, 73 and 74, a control valves 45 and 48, and a cooling section 90. The present embodiment is different from the sixth embodiment in that the treatment section 5 and the separation section 6 are added and that water separated in the separation section 6 is supplied to the cooling water storage section 70.

Here, since the treatment section 5 and the separation section 6 are the same as those of the first embodiment or the like other than that water separated in the separation section 6 is supplied to the cooling water storage section 70, their explanation will be omitted.

In addition, as for an operation of the energy supplying system according to the seventh embodiment of the present invention, operations of the treatment section 5 and the separation section 6 after the control section causes the control valve 48 to allow the slurry in which the magnesium hydroxide 22 is mixed with the water 23 to be delivered to the treatment section 5 via the pipe 14 are the same as those of the first embodiment, thus their explanation will be omitted.

Also in this case, the effect of the first embodiment and the effect of the operation of the sixth embodiment can be obtained.

It is obvious that the present invention is not limited to the above described embodiments and that the respective embodiments can be arbitrarily modified and changed in the scope of technical ideas of the present invention. In addition, the above mentioned respective embodiments can be arbitrarily carried out by combining them as long as there is no conflict among them.

According to the present invention, emissions can be suppressed and efficiency can be improved in an energy supplying system used in a closed space. As for an energy supplying system used in a closed space, increase of the concentration of carbon dioxide in the closed space can be suppressed. In a closed space, a required amount of hydrogen can be stably produced and supplied without depending on operational conditions.

## Claims

1. An energy supplying system comprising:
a hydrogen supplying section in which hydrogen-producing material reacts with water to produce hydrogen and hydroxide;
an energy generating section configured to generate energy by using said hydrogen supplied from said hydrogen supplying section and oxygen supplied from an oxygen supplying section; and
a treatment section in which said hydroxide produced in said hydrogen supplying section reacts with gas including at least carbon dioxide to produce said water.

2. The energy supplying system according to claim 1, further comprising:
a separation section configured to separate respectively carbonate produced in said hydrogen supplying section and said water.

3. The energy supplying system according to claim 1 or claim 2, wherein said hydrogen-producing material is particle including at least one material selected from a group consisting of Mg, Ni, Fe, V, Mn, Ti, Cu, Ag, Ca, Zn, Zr, Co, Cr and Al, and
a surface of said hydride is coated with a water-soluble film.

4. The energy supplying system according to claim 3, wherein said water-soluble film includes material which dissolves when contacting water.

5. The energy supplying system according to claim 4, wherein said water-soluble film includes at least one material selected from a group consisting of materials which dissolve when contacting water such as aqueous epoxy resin, aqueous urethane resin, aqueous acrylic resin, aqueous polyester resin, aqueous acrylic silicon resin, aqueous fluorine resin, and aqueous hybrid polymer of silica and organic compound.

6. The energy supplying system according to any one of claims 1 to 5, wherein said hydrogen supplying section includes temperature regulating means for controlling temperature of said hydrogen-producing material.

7. The energy supplying system according to any one of claims 1 to 6, further comprising:
water amount regulating means for controlling amount of water in said hydrogen supplying section.

8. The energy supplying system according to any one of claims 1 to 7, further comprising:
pressure regulating means for controlling pressure in said hydrogen supplying section.

9. The energy supplying system according to any one of claims 1 to 8, wherein said hydrogen supplying section includes a hydrogen-producing material supplying section configured to supply said hydrogen-producing material into said hydrogen supplying section.

10. The energy supplying system according to any one of claims 1 to 9, further comprising:
a heat exchanging section configured to control temperatures of said water and said hydrogen.

11. The energy supplying system according to claim 10 wherein said heat exchanging section controls temperatures of said water and said hydrogen by using said oxygen.

12. The energy supplying system according to any one of claims 1 to 11, wherein said water includes water vapor.

13. Hydrogen-producing material comprising:
a particle reacting with water to emit hydrogen; and
a water-soluble film coating a surface of said particle.

14. The hydrogen-producing material according to claim 13, wherein said particle includes material having a characteristic of emitting hydrogen in a hydrolysis reaction.

15. The hydrogen-producing material according to claim 14, wherein said particle includes at least one material selected from a group consisting of Mg, Ni, Fe, V, Mn, Ti, Cu, Ag, Ca, Zn, Zr, Co, Cr, and Al.

16. The hydrogen-producing material according to any one of claims 13 to 15, wherein said water-soluble film includes material which dissolves when contacting water.

17. The hydrogen-producing material according to claim 16, wherein said water-soluble film includes at least one material selected from a group consisting of such as aqueous epoxy resin, aqueous urethane resin, aqueous acrylic resin, aqueous polyester resin, aqueous acrylic silicon resin, aqueous fluorine resin, and aqueous hybridpolymer of silica and organic compound.

18. A production method of hydrogen-producing material comprising:
(a) placing a particle reacting with water to emit hydrogen in a reducing atmosphere of a first condition such that an oxide film on a surface of said particle is removed; and
(b) placing said particle in an oxidizing atmosphere of a second condition such that an oxide film is formed on a part of said surface.

19. The production method of hydrogen-producing material according to claim 18, wherein said particle includes material having a characteristic of emitting hydrogen in a hydrolysis reaction.

20. The production method of hydrogen-producing material according to claim 19, wherein said particle includes at least one material selected from a group consisting of Mg, Ni, Fe, V, Mn, Ti, Cu, Ag, Ca, Zn, Zr, Co, Cr, and Al.

21. The production method of hydrogen-producing material according to claim 19 or claim 20, wherein said oxidizing atmosphere of said second condition is controlled through a ratio between partial pressures of oxygen and non-oxidizing gas.

22. An energy supplying system comprising:
a hydrogen supplying section in which hydrogen-producing material reacts with water to produce hydrogen and hydroxide;
an energy generating section configured to generate energy by using said hydrogen supplied from said hydrogen supplying section and oxygen supplied from an oxygen supplying section; and
a cooling section including a circulation flow path in which cooling water for cooling said energy generating section flows, and
wherein said circulation flow path includes a branch flow path for supplying said cooling water from said circulation flow path to said hydrogen supplying section based on flow rate of hydrogen supplied from said hydrogen supplying section to said energy generating section.

23. The energy supplying system according to claim 22, further comprising:
a treatment section in which said hydroxide produced in said hydrogen supplying section reacts with gas including at least carbon dioxide to produce water.

24. The energy supplying system according to claim 23, further comprising:
a separation section configured to separate respectively carbonate produced in said hydrogen supplying section and said water.

## Amended claims

### Amended claims under Art. 19.1 PCT

1. An energy supplying system comprising:
a hydrogen supplying section in which hydrogen-producing material reacts with water to produce hydrogen and hydroxide;
an energy generating section configured to generate energy by using said hydrogen supplied from said hydrogen supplying section and oxygen supplied from an oxygen supplying section; and
a treatment section in which said hydroxide produced in said hydrogen supplying section reacts with gas including at least carbon dioxide to produce said water.

2. The energy supplying system according to claim 1, further comprising:
a separation section configured to separate respectively carbonate produced in said hydrogen supplying section and said water.

3. (Amended) The energy supplying system according to claim 1 or claim2, wherein said hydrogen-producing material is particle including at least one material selected from a group consisting of Mg, Ni, Fe, V, Mn, Ti, Cu, Ag, Ca, Zn, Zr, Co, Cr and Al, and
a surface of said hydride is coated with a water-soluble film.

4. The energy supplying system according to claim 3, wherein said water-soluble film includes material which dissolves when contacting water.

5. The energy supplying system according to claim 4, wherein said water-soluble film includes at least one material selected from a group consisting of materials which dissolve when contacting water such as aqueous epoxy resin, aqueous urethane resin, aqueous acrylic resin, aqueous polyester resin, aqueous acrylic silicon resin, aqueous fluorine resin, and aqueous hybrid polymer of silica and organic compound.

6. The energy supplying system according to any one of claims 1 to 5,

Statement under Art. 19.1 PCT
Claim 3 is amended based on the descriptions of paragraph [0042]. This amendment is made to correct errors and does not introduce any new matter.
